# EUROPEAN PATENT SPECIFICATION

(11) **EP 4 035 844 B1**
(45) Date of publication and mention of the grant of the patent: **06.11.2024**
(21) Application number: 20868904.2
(22) Date of filing: 09.06.2020
(51) Int. Cl.: B25J 9/16, B25J 11/00

(54) **ROBOT CONTROL METHOD AND APPARATUS, STORAGE MEDIUM, AND PROCESSOR**
VERFAHREN UND VORRICHTUNG ZUR ROBOTERSTEUERUNG, SPEICHERMEDIUM UND PROZESSOR
PROCÉDÉ ET APPAREIL DE COMMANDE DE ROBOT, SUPPORT D'INFORMATIONS ET PROCESSEUR

(30) Priority: 29.09.2019 CN 201910936985
(43) Date of publication of application: 03.08.2022
(73) Proprietor: Zhuhai Gree Intelligent Equipment Co., Lte., Zhuhai, Guangdong 519070 (CN); Gree Electric Appliances, Inc. of Zhuhai, Zhuhai, Guangdong 519070 (CN)
(72) Inventor: WANG, Linbing, Zhuhai, Guangdong 519070 (CN); WU, Hongming, Zhuhai, Guangdong 519070 (CN); DONG, Shuhai, Zhuhai, Guangdong 519070 (CN); WEN, Hui, Zhuhai, Guangdong 519070 (CN); MA, Xuwu, Zhuhai, Guangdong 519070 (CN); LI, Jiulin, Zhuhai, Guangdong 519070 (CN); ZHONG, Wentao, Zhuhai, Guangdong 519070 (CN); FU, Fangxuan, Zhuhai, Guangdong 519070 (CN)
(74) Representative: Zacco GmbH
(86) International application number: PCT/CN2020/095203
(87) International publication number: WO 2021/057093

(56) References cited:
- WO-A1-2009/149805
- WO-A1-2011/042293
- WO-A2-2015/135917
- CN-A- 108 858 185
- CN-A- 109 213 096
- CN-A- 110 202 585
- CN-A- 110 202 585
- CN-A- 110 666 795
- CN-U- 205 451 255
- KR-A- 20180 115 073
- US-A1- 2018 281 173

## Description

### Cross-Reference to Related Application

The application claims priority to Chinese Patent Application No. 201910936985.1, filed to the China National Intellectual Property Administration on September 29, 2019 and entitled "Robot Control Method and Apparatus, Storage Medium and Processor".

### Technical Field

The application relates to the technical field of robot control, and in particular to a robot control method and apparatus, a storage medium and a processor.

### Background

The operation of a robot needs an operating instruction. A traditional operating instruction is single point-to-point, straight-line or arc movement only, and there is no additional handling mode (for example, input and output of a signal during the operation, and early signal judgment before ending of the operation). Different programming instructions need to be combined during the practical application, and it is very tedious to edit repeatedly. For example, a signal instruction is added to close a glue gun when the robot moves to a destination during the application of glue spraying, in this way there is a hidden danger of hung glue, and the process quality of a product will be affected.

In allusion to the above mentioned problem that an operating control mode of the robot in the related art is not reasonable enough, no effective solution has been proposed yet at present.

US20180281173A1 and WO2011042293A1 provide respective technical solutions; however, the above mentioned problem still remains unsolved.

### Summary

The embodiments of the application provide a robot control method and apparatus, a storage medium and a processor, as to at least solve the technical problem that an operating control mode of a robot in the related art is not reasonable enough.

According to one aspect of the embodiments of the application, a robot control method is provided, including: operating configuration parameters of a robot are set according to working characteristic information of the robot, wherein, the working characteristic information is used for representing an operating environment and an operating purpose of the robot, and the operating configuration parameters comprise:
an operating speed of the robot, an operating track of the robot and a switching condition of the robot, wherein the switching condition is a condition needing to be satisfied when the robot switches to another operating status from one operating status during the operation, a predetermined signal is transmitted to the robot in response to triggering the switching condition contained in the operating configuration parameters during the operation of the robot, and the robot is controlled to execute a control instruction corresponding to the predetermined signal,
wherein the predetermined signal is used for generating the control instruction to control the robot to close a glue spraying device.

Optionally, after the operating configuration parameters of the robot are set according to the working characteristic information of the robot, the robot control method may further includes: the robot is triggered to start, and the robot is controlled to operate according to the operating environment and the operating purpose corresponding to the working characteristic parameters.

Optionally, the operation that the operating configuration parameters of the robot are set according to the working characteristic information of the robot may include: the operating track of the robot is determined according to the working characteristic information of the robot, and a first switching condition and a first triggering result of the robot are determined according to the working characteristic information of the robot and the operating track of the robot, wherein, the first triggering result is an action to be executed by the robot in response to meeting the first switching condition.

Optionally, the operation that the operating configuration parameters of the robot are set according to the working characteristic information of the robot may include: an operating time period until the robot completes the operating purpose is determined according to the working characteristic parameters of the robot, and a second switching condition and a second triggering result of the robot are determined according to the working characteristic information of the robot and the operating time period of the robot, wherein, the second triggering result is an action to be executed by the robot in response to meeting the second switching condition.

Optionally, the robot is arranged with a glue spraying device, wherein, the glue spraying device is configured to perform glue spraying on a predetermined object.

According to another aspect of the embodiments of the application, a robot control apparatus is further provided. The apparatus may includes: a setting unit, which is configured to set operating configuration parameters of a robot according to working characteristic information of the robot, wherein, the working characteristic information is used for representing an operating environment and an operating purpose of the robot, and the operating configuration parameters comprise:
an operating speed of the robot, an operating track of the robot and a switching condition of the robot, wherein the switching condition is a condition needing to be satisfied when the robot switches to another operating status from one operating status during the operation, a transmission unit, which is configured to transmit a predetermined signal to the robot in response to triggering the switching condition contained in the operating configuration parameters during the operation of the robot, and a first control unit, which is configured to control the robot to execute a control instruction corresponding to the predetermined signal,
wherein the predetermined signal is used for generating the control instruction to control the robot to close a glue spraying device.

Optionally, the robot control apparatus may further includes: a triggering unit, which is configured to trigger the robot to start after the operating configuration parameters of the robot are set according to the working characteristic information of the robot, and a second control unit, which is configured to control the robot to operate according to the operating environment and the operating purpose corresponding to the working characteristic parameters.

Optionally, the setting unit may includes: a first determination module, which is configured to determine the operating track of the robot according to the working characteristic information of the robot, and a second determination module, which is configured to determine a first switching condition and a first triggering result of the robot according to the working characteristic information of the robot and the operating track of the robot, wherein, the first triggering result is an action to be executed by the robot in response to meeting the first switching condition.

Optionally, the setting unit may includes: a third determination module, which is configured to determine an operating time period until the robot completes the operating purpose according to the working characteristic parameters of the robot, and a fourth determination module, which is configured to determine a second switching condition and a second triggering result of the robot according to the working characteristic information of the robot and the operating time of the robot, wherein, the second triggering result is an action to be executed by the robot in response to meeting the second switching condition.

Optionally, the robot is arranged with a glue spraying device, wherein, the glue spraying device is configured to perform glue spraying on a predetermined object.

According to another aspect of the embodiments of the application, a storage medium is further provided. The storage medium may includes a stored program, wherein, the program executes the robot control method as mentioned in any of the above.

According to another aspect of the embodiments of the application, a processor is further provided. The processor is configured to operate a program, wherein, the program executes the robot control method as mentioned in any of the above during the operation.

In the embodiments of the application, the operating configuration parameters of the robot are set according to the working characteristic information of the robot, wherein, the working characteristic information is used for representing the operating environment and the operating purpose of the robot, and the operating configuration parameters comprise the at least one of the following the operating speed of the robot, the operating track of the robot and the switching condition of the robot, the predetermined signal is transmitted to the robot in response to receiving the switching condition contained in the operating configuration parameters during the operation of the robot, and the robot is controlled to execute the control instruction corresponding to the predetermined signal, in this way the robot may be reasonably controlled according to the operating purpose of the robot. Through the robot control method provided by the embodiments of the application, the purpose of controlling the robot according to the working characteristic information of the robot is realized. When the robot needs to execute predetermined operation of a target object, the robot is not controlled to switch an operating process when the robot completes the whole task but the robot is controlled to switch the operating process according to a switching condition of a preset robot. In this way, the technical effect of improving the control rationality of the robot is achieved, and accordingly the technical problem that the operating control mode of the robot in the related art is not reasonable enough is solved.

### Brief Description of the Drawings

The accompanying drawings described herein are used to provide a further understanding of the application, and constitute a part of the application, and the exemplary embodiments of the application and the description thereof are used to explain the application, but do not constitute improper limitations to the application. In the drawings:
Fig. 1 is a flow chart of a robot control method according to an embodiment of the application.
Fig. 2 is a flow chart of an optional robot control method according to an embodiment of the application.
Fig. 3 is a schematic diagram of a robot control apparatus according to an embodiment of the application.

### Detailed Description of the Embodiments

In order to make the solutions of the application better understood by those skilled in the art, the technical solutions in the embodiments of the application will be clearly and completely described below in combination with the drawings in the embodiments of the application. It is apparent that the described embodiments are not all embodiments but part of embodiments of the application. All other embodiments obtained by those of ordinary skill in the art according to the embodiments in the application without creative work shall fall within the scope of protection of the application.

It is to be noted that terms "first", "second" and the like in the description, claims and the above mentioned drawings of the application are used for distinguishing similar objects rather than describing a specific sequence or a precedence order. It should be understood that the data used in such a way may be exchanged where appropriate, in order that the embodiments of the application described here can be implemented in a sequence other than sequences graphically shown or described here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

### Embodiment 1

According to the embodiments of the application, a method embodiment of a robot control method is provided. It is to be noted that steps shown in a flow chart of a drawing may be executed in a computer system, for example, of a group of computer-executable instructions. In addition, although a logic sequence is shown in the flow chart, the shown or described steps may be executed in a sequence different from that described here in some circumstances.

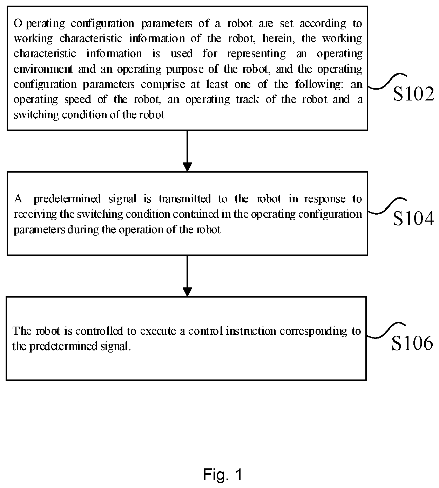

Fig. 1 is a flow chart of a robot control method according to an embodiment of the application. As shown in Fig. 1, the robot control method may includes the following steps.

Step S102, operating configuration parameters of a robot are set according to working characteristic information of the robot, wherein, the working characteristic information is used for representing an operating environment and an operating purpose of the robot, and the operating configuration parameters comprise:
an operating speed of the robot, an operating track of the robot and a switching condition of the robot.

The working characteristic information is be used for representing the operating environment and the operating purpose of the robot. For example, the operating environment may be an operating place of the robot or an operating location of the robot and the like, and the operating purpose of the robot means the operation needing to be executed when the robot operates, namely, use of the robot, for example, glue spraying executed for a target object and feeding executed for a predetermined machine tool.

The switching condition of the robot means the condition needing to be satisfied when the robot switches to another operating status from one operating status during the operation, namely, in a process of operating in the one operating status, the robot may switch to the another operating status when a certain condition is satisfied.

Step S104, a predetermined signal is transmitted to the robot in response to trigerring the switching condition contained in the operating configuration parameters during the operation of the robot.

Step S106, the robot is controlled to execute a control instruction corresponding to the predetermined signal.

From the above, in the embodiments of the application, after the operating configuration parameters of the robot are set according to the working characteristic information of the robot, the predetermined signal is transmitted to the robot in response to receiving the switching condition contained in the operating configuration parameters during the operation of the robot, then the robot is controlled to execute the control instruction corresponding to the predetermined signal, in this way the purpose of controlling the robot according to working characteristic information of the robot.

It is easy to be noted that in the embodiments of the application, after the operating configuration parameters of the robot are set according to the working characteristic information of the robot, the predetermined signal is transmitted to the robot in response to trigerring the switching condition contained in the operating configuration parameters during the operation of the robot, then the robot is controlled to execute the control instruction corresponding to the predetermined signal, in this way the purpose of controlling the robot according to working characteristic information of the robot. When the robot needs to execute predetermined operation for the target object, the robot is not controlled to switch to an operating process when the robot completes the whole task but the robot is controlled to switch to the operating process according to a switching condition of a preset robot, in this way the technical effect of improving the control rationality of the robot is achieved.

Therefore, through the technical solutions recorded in the embodiments of the application, the technical problem that an operating control mode of the robot in the related art is not reasonable enough is solved.

In an optional embodiment, after the operating configuration parameters of the robot are set according to the working characteristic information of the robot, the robot control method may further includes: the robot is triggered to start, and the robot is controlled to operate according to the operating environment and the operating purpose corresponding to the working characteristic parameters.

In an application scene, if the operating purpose of the robot is to spray glue to the target object, the robot may be controlled to spray the glue for the target object according to a preset operating track and a preset operating speed when the target object is in place.

On one hand, the operation that the operating configuration parameters of the robot are set according to the working characteristic information of the robot may includes: the operating track of the robot is determined according to the working characteristic information of the robot, and a first switching condition and a first triggering result of the robot are determined according to the working characteristic information of the robot and the operating track of the robot, wherein, the first triggering result is an action to be executed by the robot in response to meeting the first switching condition.

The above mentioned application scene is still taken as an example, when the robot needs to execute glue spraying for the target object, the operating track of the robot is determined according to a location relationship between the target object and the robot. For example, the operating track is a section of track from A to B, wherein, it is 1000mm from A to B, and an output signal is needed at C in the middle. Then, C is 500mm far from A. In this case, in the related art, one movement instruction is written first generally, from A to C, then another movement instruction is written, from A to B, and a program is ended.

However, through the technical solutions provided by the embodiments of the embodiment, a linear distance 1000mm from A to B needs to be configured only. Then a triggering condition and the triggering result are configured: the triggering condition is the point C, the distance is 5mm far from the point A, and the triggering result is to configure the output signal, in this way the hidden danger of glue hanging when the robot sprays the glue may be rapidly and effectively solved, because residual may be left on a glue spraying device when the glue spraying device is closed and the robot moves to a destination, the glue may drops on a product, and accordingly the quality of the product may be affected. With the adoption of the embodiments of the application, the output signal may be triggered in advance a short distance before the destination, as to close the glue spraying device in advance. In this way, when the robot moves to the destination, the glue of the glue spraying device of the robot just drips off, and accordingly the problem in the related art may be solved.

On the other hand, the operation that the operating configuration parameters of the robot are set according to the working characteristic information of the robot may includes: an operating time period until the robot completes the operating purpose is determined according to the working characteristic parameters of the robot, and a second switching condition and a second triggering result of the robot are determined according to the working characteristic information of the robot and the operating time of the robot, wherein, the second triggering result is an action to be executed by the robot in response to meeting the second switching condition.

Optionally, the operating time period until the robot completes the operating purpose is determined according to the working characteristic parameters of the robot, the time that the robot switches the control instruction is determined according to the working characteristic information and the operating time of the robot, namely, total time that the robot operates from an operating starting point before switching the control instruction, as to control the glue spraying device to close. Then the second switching condition is determined, namely, the time that the switching instruction is triggered. In addition, in the case that the second switching condition is determined, the second triggering result corresponding to the second switching condition needs to be determined as well, namely, the switching instruction used for indicating a type of operation that the robot executes.

In an optional embodiment, the robot is arranged with the glue spraying device, wherein the glue spraying device is configured to perform glue spraying on a predetermined object.

In the case that the robot is arranged with the glue spraying device, the operation that the robot is controlled to execute the control instruction corresponding to the predetermined signal may includes: the robot is controlled to close the glue spraying device according to the control instruction corresponding to the predetermined signal in response to receiving the predetermined signal.

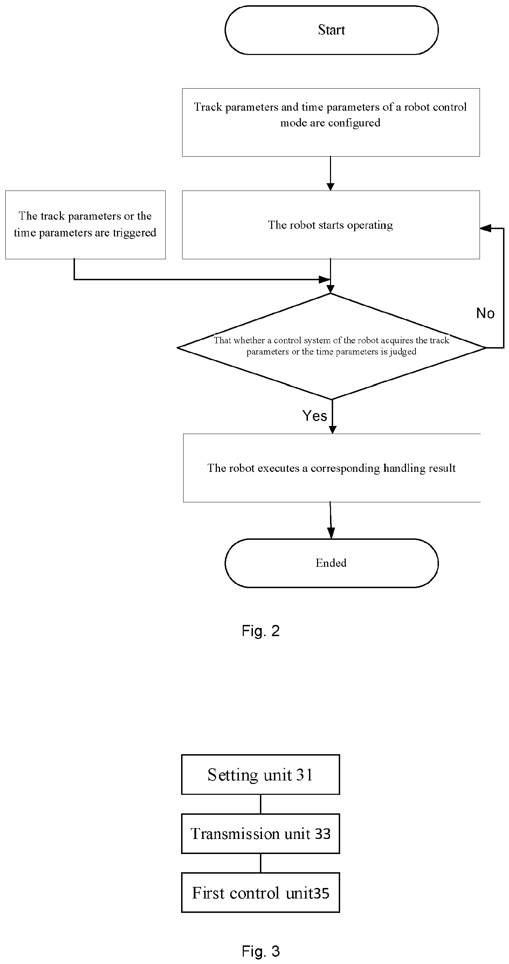

Fig. 2 is a flow chart of an optional robot control method according to an embodiment of the application. As shown in Fig. 2, track parameters and time parameters of a robot control mode are configured before the robot starts moving, namely, a point on the operating track where the robot starts to switch an operating instruction or the time that the robot starts to switch the operating instruction during the operation. When the above mentioned parameters are determined, the robot starts operating. When the track parameters (namely, the above mentioned first switching condition) or the time parameters (namely, the above mentioned second switching condition) are triggered, that whether a control system of the robot acquires the track parameters or the time parameters is judged. If so, the robot executes a corresponding handling result, namely, execute the corresponding operation according to the first triggering result or the second triggering result. If not, the robot continues to operate in a preset operating mode, namely, the robot continues to execute a current instruction.

Through the robot control method provided by the embodiments of the application, a displacement or time triggering handling mode may be added according to movement of the robot, and triggering may be implemented through the time taken as a signal or through a movement track. Meanwhile, the problem that an application terminal program of the robot is repeatedly nested is effectively solved, thereby facilitating implementation of a process.

### Embodiment 2

According to another aspect of the embodiments of the application, an apparatus embodiment used for executing the robot control method is further provided. Fig. 3 is a schematic diagram of a robot control apparatus according to an embodiment of the application. As shown in Fig. 3, the robot control apparatus may include: a setting unit 31, a transmission unit 33 and a first control unit 35. The robot control apparatus will be described in detail below.

The setting unit 31 which is configured to set operating configuration parameters of a robot according to working characteristic information of the robot, wherein the working characteristic information is used for representing an operating environment and an operating purpose of the robot, and the operating configuration parameters comprise at least one of the following: an operating speed of the robot, an operating track of the robot and a switching condition of the robot.

The transmission unit 33 which is configured to transmit a predetermined signal to the robot in response to receiving the switching condition contained in the operating configuration parameters during the operation of the robot.

The first control unit 35 which is configured to control the robot to execute a control instruction corresponding to the predetermined signal.

It is to be noted here that the above mentioned setting unit 31, the above mentioned transmission unit 33 and the above mentioned first control unit 35 correspond to Steps S102-S106 in embodiment 1, examples and application scenes realized by the above mentioned modules and corresponding steps are the same, but are not limited to contents disclosed by the above mentioned embodiment 1. It is to be noted that the above mentioned modules, as part of the apparatus, may be executed in a computer system, for example, of a group of computer-executable instructions.

From the above, in the above mentioned embodiments of the application, the operating configuration parameters of the robot may be set by making use of the setting unit according to the working characteristic information of the robot, wherein the working characteristic information is used for representing the operating environment and the operating purpose of the robot, and the operating configuration parameters comprise the at least one of the following: the operating speed of the robot, the operating track of the robot and the switching condition of the robot, the predetermined signal may be transmitted to the robot by making use of the transmission unit in response to receiving the switching condition contained in the operating configuration parameters during the operation of the robot, and the robot may be controlled by making use of the first control unit to execute the control instruction corresponding to the predetermined signal. Through the robot control apparatus provided by the embodiments of the application, the purpose of controlling the robot according to the working characteristic information of the robot is realized. When the robot needs to execute predetermined operation for a target object, the robot is not controlled to switch an operating process when the robot completes the whole task but the robot is controlled to switch the operating process according to a switching condition of a preset robot, in this way the technical effect of improving control rationality of the robot is achieved, and accordingly the technical problem that an operating control mode of the robot in the related art is not reasonable enough is solved.

In an optional embodiment, the robot control apparatus may further include: a triggering unit, which is configured to trigger the robot to start after the operating configuration parameters of the robot are set according to the working characteristic information of the robot, and a second control unit, which is configured to control the robot to operate according to the operating environment and the operating purpose corresponding to the working characteristic parameters.

In an optional embodiment, the setting unit may includes: a first determination module, which is configured to determine the operating track of the robot according to the working characteristic information of the robot, and a second determination module, which is configured to determine a first switching condition and a first triggering result of the robot according to the working characteristic information of the robot and the operating track of the robot, wherein the first triggering result is an action to be executed by the robot in response to meeting the first switching condition.

In an optional embodiment, the setting unit may includes: a third determination module, which is configured to determine an operating time period until the robot completes the operating purpose according to the working characteristic parameters of the robot, and a fourth determination module, which is configured to determine a second switching condition and a second triggering result of the robot according to the working characteristic information of the robot and the operating time of the robot, wherein the second triggering result is an action to executed by the robot in response to meeting the second switching condition.

In an optional embodiment, the robot is arranged with a glue spraying device, wherein the glue spraying device is configured to perform glue spraying on a predetermined object.

In an optional embodiment, the predetermined signal is used for generating the control instruction to control the robot to close the glue spraying device.

### Embodiment 3

According to another aspect of the embodiments of the application, a storage medium is further provided. The storage medium may includes a stored program, wherein the program executes the robot control method as mentioned in any of the above.

### Embodiment 4

According to another aspect of the embodiments of the application, a processor is further provided. The processor is configured to operate a program, wherein the program executes the robot control method as mentioned in any of the above during the operation.

The sequence numbers of the embodiments of the above mentioned application are merely used for descriptions and do not represent the strengths and weaknesses of the embodiments.

In the above mentioned embodiments of the application, descriptions of each embodiment are emphasized respectively, and parts which are not elaborated in detail in a certain embodiment may refer to relevant descriptions of other embodiments.

In several embodiments provided by the application, it is to be understood that the disclosed technical contents may be implemented in other manners. Wherein the device embodiments described above are merely illustrative. For example, the division of the units may be a logical function division. In actual implementation, there may be another division manner, for example, multiple units or components may be combined or integrated into another system, or some features may be ignored or not executed. In addition, coupling or direct coupling or communication connection displayed or discussed may be indirect coupling or communication connection between units or modules through some interfaces, and may be electrical or otherwise.

The units described as separate components may or may not be physically separated, and the components displayed as units may or may not be physical units, that is, may be located in one place, or may be distributed to multiple units. Some or all of the units may be selected according to actual needs to achieve an objective of the solution of the embodiments.

In addition, each functional unit in each embodiment of the application may be integrated into one processing unit, or each unit may exist physically separately, or two or more units may be integrated into one unit. The integrated unit may be implemented in the form of hardware or in the form of hardware and software functional units.

The integrated unit may be stored in a computer-readable storage medium if being implemented in the form of a software function unit and sold or used as a standalone product. Based on such understanding, the essence of the technical solution of the application or a part contributing to the conventional art or all or part of the technical solution may be embodied in the form of a software product that is stored in a storage medium, including a plurality of instructions used to cause a computer device (which may be a personal computer, a server, or a network device, etc.) to perform all or part of the steps of the method described in various embodiments of the application. The foregoing storage medium includes: various media capable of storing a program code such as a U disk, a Read-Only Memory (ROM), a Random Access Memory (RAM), a mobile hard disk, a magnetic disk or an optical disc.

## Claims

1. A robot control method, comprising:
setting operating configuration parameters of a robot according to working characteristic information of the robot, wherein the working characteristic information is used for representing an operating environment and an operating purpose of the robot, and the operating configuration parameters comprise: an operating speed of the robot, an operating track of the robot and a switching condition of the robot, the switching condition is a condition needing to be satisfied when the robot switches to another operating status from one operating status during the operation (S102); and **characterized in that** the method further comprising:
transmitting a predetermined signal to the robot in response to triggering the switching condition contained in the operating configuration parameters during the operation of the robot (S104), to control the robot to execute a control instruction corresponding to the predetermined signal (S106);
wherein the predetermined signal is used for generating the control instruction to control the robot to close a glue spraying device.

2. The method as claimed in claim 1, after setting the operating configuration parameters of the robot according to the working characteristic information of the robot, further comprising:
triggering the robot to start; and
controlling the robot to operate according to the operating environment and the operating purpose corresponding to the working characteristic parameters.

3. The method as claimed in claim 1, wherein setting the operating configuration parameters of the robot according to the working characteristic information of the robot comprises:
determining the operating track of the robot according to the working characteristic information of the robot; and
determining a first switching condition and a first triggering result of the robot according to the working characteristic information of the robot and the operating track of the robot, wherein, the first triggering result is an action to be executed by the robot in response to meeting the first switching condition.

4. The method as claimed in claim 1, wherein setting the operating configuration parameters of the robot according to the working characteristic information of the robot comprises:
determining an operating time period until the robot completes the operating purpose according to the working characteristic parameters of the robot; and
determining a second switching condition and a second triggering result of the robot according to the working characteristic information of the robot and the operating time period of the robot, wherein the second triggering result is an action to be executed by the robot in response to meeting the second switching condition.

5. The method as claimed in any of claims 1-4, wherein the robot is arranged with a glue spraying device, wherein the glue spraying device is configured to perform glue spraying on a predetermined object.

6. A robot control apparatus, comprising:
a setting unit (31), which is configured to set operating configuration parameters of a robot according to working characteristic information of the robot, wherein the working characteristic information is used for representing an operating environment and an operating purpose of the robot, and the operating configuration parameters comprise: an operating speed of the robot, an operating track of the robot and a switching condition of the robot, the switching condition is a condition needing to be satisfied when the robot switches to another operating status from one operating status during the operation; **characterized in that** the apparatus further comprising:
a transmission unit (33), which is configured to transmit a predetermined signal to the robot in response to triggering the switching condition contained in the operating configuration parameters during the operation of the robot; and
a first control unit (35), which is configured to control the robot to execute a control instruction corresponding to the predetermined signal;
wherein the predetermined signal is used for generating the control instruction to control the robot to close a glue spraying device.

7. The apparatus as claimed in claim 6, further comprises:
a triggering unit, which is configured to trigger the robot to start after the operating configuration parameters of the robot are set according to the working characteristic information of the robot; and
a second control unit, which is configured to control the robot to operate according to the operating environment and the operating purpose corresponding to the working characteristic parameters.

8. A storage medium, the storage medium comprising a stored program, wherein, the program executes the robot control method as claimed in any of claims 1-5 when run on a robot control apparatus.

9. Computer program running on a robot control apparatus, said program executing the robot control method as claimed in any of claims 1-5.

## Patentansprüche

1. Robotersteuerverfahren, umfassend:
Einstellen von Betriebskonfigurationsparametern eines Roboters gemäß arbeitscharakteristischen Informationen des Roboters, wobei die arbeitscharakteristischen Informationen dazu verwendet werden, eine Betriebsumgebung und einen Betriebszweck des Roboters darzustellen, und die Betriebskonfigurationsparameter umfassen: eine Betriebsgeschwindigkeit des Roboters, eine Betriebsspur des Roboters und eine Umschaltbedingung des Roboters, wobei die Umschaltbedingung eine Bedingung ist, die zu erfüllen ist, wenn der Roboter während des Betriebs von einem Betriebsstatus auf einen anderen Betriebsstatus umschaltet (S102); und
**dadurch gekennzeichnet, dass** das Verfahren ferner umfasst:
Übertragen eines vorbestimmten Signals an den Roboter als Reaktion auf das Auslösen der Umschaltbedingung, die in den Betriebskonfigurationsparametern enthalten ist, während des Betriebs des Roboters (S104), um den Roboter dazu zu steuern, eine Steueranweisung, die dem vorbestimmten Signal (S106) entspricht, durchzuführen (S106);
wobei das vorbestimmte Signal zum Generieren der Steueranweisung verwendet wird, um den Roboter dazu zu steuern, eine Klebstoffsprühvorrichtung zu schließen.

2. Verfahren nach Anspruch 1, ferner umfassend nach dem Einstellen der Betriebskonfigurationsparameter des Roboters gemäß den arbeitscharakteristischen Informationen des Roboters:
Auslösen des Roboters, damit er startet; und
Steuern des Roboters, damit er gemäß der Betriebsumgebung und dem Betriebszweck, der den arbeitscharakteristischen Parametern entspricht, betrieben wird.

3. Verfahren nach Anspruch 1, wobei das Einstellen der Betriebskonfigurationsparameter des Roboters gemäß den arbeitscharakteristischen Informationen des Roboters umfasst:
Bestimmen der Betriebsspur des Roboters gemäß den arbeitscharakteristischen Informationen des Roboters; und
Bestimmen einer ersten Umschaltbedingung und eines ersten Auslöseergebnisses des Roboters gemäß den arbeitscharakteristischen Informationen des Roboters und der Betriebsspur des Roboters, wobei das erste Auslöseergebnis eine Aktion ist, die von dem Roboter als Reaktion auf das Erfüllen der ersten Umschaltbedingung durchzuführen ist.

4. Verfahren nach Anspruch 1, wobei das Einstellen der Betriebskonfigurationsparameter des Roboters gemäß den arbeitscharakteristischen Informationen des Roboters umfasst:
Bestimmen eines Betriebszeitraums, bis der Roboter den Betriebszweck gemäß den arbeitscharakteristischen Parametern des Roboters abschließt; und
Bestimmen einer zweiten Umschaltbedingung und eines zweiten Auslöseergebnisses des Roboters gemäß den arbeitscharakteristischen Informationen des Roboters und dem Betriebszeitraum des Roboters, wobei das zweite Auslöseergebnis eine Aktion ist, die von dem Roboter als Reaktion auf das Erfüllen der zweiten Umschaltbedingung durchzuführen ist.

5. Verfahren nach einem der Ansprüche 1 bis 4, wobei der Roboter mit einer Klebstoffsprühvorrichtung ausgestattet ist, wobei die Klebstoffsprühvorrichtung dazu konfiguriert ist, an einem vorbestimmten Objekt ein Klebstoffsprühen auszuführen.

6. Robotersteuergerät, umfassend:
eine Einstelleinheit (31), die dazu konfiguriert ist, Betriebskonfigurationsparameter eines Roboters gemäß arbeitscharakteristischen Informationen des Roboters einzustellen, wobei die arbeitscharakteristischen Informationen verwendet werden, um eine Betriebsumgebung und einen Betriebszweck des Roboters darzustellen, und die Betriebskonfigurationsparameter umfassen: eine Betriebsgeschwindigkeit des Roboters, eine Betriebsspur des Roboters und eine Umschaltbedingung des Roboters, wobei die Umschaltbedingung eine Bedingung ist, die zu erfüllen ist, wenn der Roboter während des Betriebs von einem Betriebsstatus auf einen anderen Betriebsstatus umschaltet;
**dadurch gekennzeichnet, dass** das Gerät ferner umfasst:
eine Übertragungseinheit (33), die dazu konfiguriert ist, während des Betriebs des Roboters ein vorbestimmtes Signal an den Roboter zu übertragen als Reaktion auf das Auslösen der Umschaltbedingung, die in den Betriebskonfigurationsparametern enthalten ist; und
eine erste Steuereinheit (35), die dazu konfiguriert ist, den Roboter dazu zu steuern, eine Steueranweisung, die dem vorbestimmten Signal entspricht, durchzuführen;
wobei das vorbestimmte Signal zum Generieren der Steueranweisung verwendet wird, um den Roboter dazu zu steuern, eine Klebstoffsprühvorrichtung zu schließen.

7. Gerät nach Anspruch 6, ferner umfassend:
eine Auslöseeinheit, die dazu konfiguriert ist, den Roboter auszulösen, damit er startet, nachdem die Betriebskonfigurationsparameter des Roboters gemäß den arbeitscharakteristischen Informationen des Roboters eingestellt wurden; und
eine zweite Steuereinheit, die dazu konfiguriert ist, den Roboter dazu zu steuern, gemäß der Betriebsumgebung und dem Betriebszweck, die den arbeitscharakteristischen Parametern entsprechen, betrieben zu werden.

8. Speichermedium, wobei das Speichermedium ein gespeichertes Programm umfasst, wobei das Programm das Robotersteuerverfahren nach einem der Ansprüche 1 bis 5 durchführt, wenn es auf einem Robotersteuergerät abläuft.

9. Computerprogramm, das auf einem Robotersteuergerät abläuft, wobei das Programm das Robotersteuerverfahren nach einem der Ansprüche 1 bis 5 durchführt.

## Revendications

1. Procédé de commande de robot, comprenant :
le réglage de paramètres de configuration de fonctionnement d'un robot en fonction d'informations de caractéristiques de fonctionnement du robot, les informations de caractéristiques de fonctionnement étant utilisées pour représenter un environnement de fonctionnement et un objectif de fonctionnement du robot, et les paramètres de configuration de fonctionnement comprenant : une vitesse de fonctionnement du robot, une trajectoire de fonctionnement du robot et une condition de commutation du robot, la condition de commutation étant une condition devant être satisfaite lorsque le robot passe d'un état de fonctionnement à un autre pendant le fonctionnement (S102) ; et
**caractérisé en ce que** le procédé comprend en outre :
la transmission d'un signal prédéterminé au robot en réponse au déclenchement de la condition de commutation contenue dans les paramètres de configuration de fonctionnement pendant le fonctionnement du robot (S104), pour commander le robot afin d'exécuter une instruction de commande correspondant au signal prédéterminé (S106) ;
dans lequel le signal prédéterminé est utilisé pour générer l'instruction de commande afin de commander le robot afin de fermer un dispositif de pulvérisation de colle.

2. Procédé selon la revendication 1, après le réglage des paramètres de configuration de fonctionnement du robot en fonction des informations de caractéristiques de fonctionnement du robot, comprenant en outre :
le déclenchement du démarrage du robot ; et
la commande du robot pour qu'il fonctionne selon l'environnement de fonctionnement et l'objectif de fonctionnement correspondant aux paramètres de caractéristiques de travail.

3. Procédé selon la revendication 1, dans lequel le réglage des paramètres de configuration de fonctionnement du robot selon les informations de caractéristiques de travail du robot comprend :
la détermination de la trajectoire de fonctionnement du robot selon les informations de caractéristiques de travail du robot ; et
la détermination d'une première condition de commutation et d'un premier résultat de déclenchement du robot selon les informations de caractéristiques de travail du robot et la trajectoire de fonctionnement du robot, le premier résultat de déclenchement étant une action à exécuter par le robot en réponse à la satisfaction de la première condition de commutation.

4. Procédé selon la revendication 1, dans lequel le réglage des paramètres de configuration de fonctionnement du robot selon les informations de caractéristiques de travail du robot comprend :
la détermination d'une période de temps de fonctionnement jusqu'à ce que le robot accomplisse l'objectif de fonctionnement selon les paramètres de caractéristiques de travail du robot ; et
la détermination d'une seconde condition de commutation et d'un second résultat de déclenchement du robot selon les informations de caractéristiques de travail du robot et la période de temps de fonctionnement du robot, le second résultat de déclenchement étant une action à exécuter par le robot en réponse à la satisfaction de la seconde condition de commutation.

5. Procédé selon l'une quelconque des revendications 1 à 4, dans lequel le robot est agencé avec un dispositif de pulvérisation de colle, dans lequel le dispositif de pulvérisation de colle est configuré pour effectuer une pulvérisation de colle sur un objet prédéterminé.

6. Appareil de commande de robot, comprenant :
une unité de réglage (31), qui est configurée pour régler des paramètres de configuration de fonctionnement d'un robot en fonction d'informations de caractéristiques de fonctionnement du robot, dans lequel les informations de caractéristiques de fonctionnement sont utilisées pour représenter un environnement de fonctionnement et un objectif de fonctionnement du robot, et les paramètres de configuration de fonctionnement comprennent :
une vitesse de fonctionnement du robot, une trajectoire de fonctionnement du robot et une condition de commutation du robot, la condition de commutation étant une condition devant être satisfaite lorsque le robot passe d'un état de fonctionnement à un autre état de fonctionnement pendant le fonctionnement ;
**caractérisé en ce que** l'appareil comprend en outre :
une unité de transmission (33), qui est configurée pour transmettre un signal prédéterminé au robot en réponse au déclenchement de la condition de commutation contenue dans les paramètres de configuration de fonctionnement pendant le fonctionnement du robot ; et
une première unité de commande (35), qui est configurée pour commander le robot afin qu'il exécute une instruction de commande correspondant au signal prédéterminé ;
dans lequel le signal prédéterminé est utilisé pour générer l'instruction de commande pour commander le robot afin de fermer un dispositif de pulvérisation de colle.

7. Appareil selon la revendication 6 comprend en outre :
une unité de déclenchement, qui est configurée pour déclencher le démarrage du robot après que les paramètres de configuration de fonctionnement du robot sont définis en fonction des informations de caractéristiques de travail du robot ; et
une seconde unité de commande, qui est configurée pour commander le fonctionnement du robot en fonction de l'environnement de fonctionnement et de l'objectif de fonctionnement correspondant aux paramètres de caractéristiques de travail.

8. Support de stockage, le support de stockage comprenant un programme stocké, dans lequel le programme exécute le procédé de commande de robot tel que revendiqué selon l'une quelconque des revendications 1 à 5 lorsqu'il est exécuté sur un appareil de commande de robot.

9. Programme informatique exécuté sur un appareil de commande de robot, ledit programme exécutant le procédé de commande de robot tel que revendiqué selon l'une quelconque des revendications 1 à 5.
